# EUROPÄISCHE PATENTSCHRIFT

(11) **EP 0 742 676 B1**
(45) Veröffentlichungstag und Bekanntmachung des Hinweises auf die Patenterteilung: **03.04.2002**
(21) Anmeldenummer: 96106981.2
(22) Anmeldetag: 03.05.1996
(51) Int. Cl.: H04Q 7/22

(54) **Verfahren zur Übertragung von jeweils aus einem Mobilfunknetz an einen Funkteilnehmer gerichteten und von einer Funkteilnehmerstation empfangenen Meldungen**
Method for message transmission from a mobile radio network to a radio subscriber
Méthode pour la transmission d'un message à destination d'un abonné radio à partir d'un réseau radio mobile

(30) Priorität: 08.05.1995 DE 19516821
(43) Veröffentlichungstag der Anmeldung: 13.11.1996
(73) Patentinhaber: SIEMENS AKTIENGESELLSCHAFT, 80333 München (DE)
(72) Erfinder: Dzuban, Stanislav, Dipl.-Ing., 1030 Wien (AT)

(56) Entgegenhaltungen:
- EP-A- 0 150 273
- WO-A-94/10814
- GB-A- 2 283 597
- US-A- 5 361 397
- US-A- 5 388 146

## Beschreibung

Die Erfindung betrifft ein Verfahren zur Übertragung von Meldungen, die jeweils aus einem Mobilfunknetz an einen Funkteilnehmer gerichtet und von einer Funkteilnehmerstation empfangen werden, gemäß dem Oberbegriff des Patentanspruchs 1 bzw. des Patentanspruchs 5.

Das länderübergreifende standardisierte GSM-Mobilfunksystem (Global System for Mobile Communication) umfaßt eine Vielzahl von Ländern, in denen jeweils landeseigene Mobilfunknetzbetreiber existieren. Bei der Einführung von Zusatzdiensten (Supplementary Services) für die Funkteilnehmer im GSM-Mobilfunksystem besteht von Seiten der Mobilfunknetzbetreiber der Wunsch nach Unterstützung der neuen Zusatzdienste durch Funkteilnehmerstationen, die seit den Anfängen der Standardisierung im Einsatz sind. Die Übermittlung von Teilnehmerdaten von den Funkteilnehmerstationen zu den Einrichtungen des Mobilfunknetzes ist aus der Sicht der Standardisierung unkritisch, da für Teilnehmereingaben definierte Zeichenfolgen, die einfach und sprachenneutral sind, festgelegt wurden Anders hingegen ist die Situation bei der Übertragung von Meldungen aus dem Mobilfunknetz zu den Funkteilnehmerstationen. Zum einen liegt die Kenntnis der für den Funkteilnehmer verständlichen Sprache bei der Funkteilnehmerstation, zum anderen das Wissen über den jeweiligen Zusatzdienst, bei dessen Nutzung eine Meldung an den Funkteilnehmer gesendet wird, im Mobilfunknetz selbst.

Ein derartiges Verfahren wird in US-A-5 361 397 offenbart, das den nächstliegenden Stand der Technik darstellt.

Es ist Aufgabe der vorliegenden Erfindung, ein Verfahren der eingangs genannten Art zu schaffen, durch das die Meldungen den Funkteilnehmern, die sich auch in anderen Netzen als dem eigenen Mobilfunknetz aufhalten, in einer für sie verständlichen Sprache zur Verfügung gestellt werden können.

Diese Aufgabe wird erfindungsgemäß durch die Merkmale des Patentanspruchs 1 bzw. des Patentanspruchs 5 gelöst. Weiterbildungen der Erfindung sind in Unteransprüchen angegeben.

Durch einen in den Meldungen jeweils enthaltenen Nummerncode können den in einer für den Funkteilnehmer nicht verständlichen Sprache vorliegenden Nutzinformationen entsprechende Nutzinformationen in einer anderen Sprache in jedem Mobilfunknetz zugeordnet werden. Diese entsprechenden Nutzinformationen werden auf Anforderung nach Empfang der unverständlichen Meldung oder vor der Übertragung der unverständlichen Meldung von einer Codetabelle im Heimat-Mobilfunknetz des Funkteilnehmers abgerufen und in einer Meldung zur Funkteilnehmerstation übertragen.

Gemäß einer Weiterbildung der Erfindung wird nach Empfang der unverständlichen Meldung von der Funkteilnehmerstation des Funkteilnehmers zusammen mit dem Nummerncode eine Anforderung zur Übermittlung der entsprechenden Nutzinformationen in der anderen Sprache an die für den Funkteilnehmer aktuell zuständige Mobilvermittlungsstelle im anderen Mobilfunknetz gerichtet.

Von Vorteil ist es, wenn die Anforderung zusammen mit dem Nummerncode von der aktuell zuständigen Mobilvermittlungsstelle an eine zentrale Teilnehmerdatenbasis im Heimat-Mobilfunknetz des Funkteilnehmers weitergeleitet und die entsprechenden Nutzinformationen in der anderen Sprache von einer mit der zentralen Teilnehmerdatenbasis in Verbindung stehenden Codetabelle bereitgestellt und über die aktuell zuständige Mobilvermittlungsstelle zur Funkteilnehmerstation rückgesendet werden.

Gemäß einer anderen Weiterbildung der Erfindung wird eine Anforderung zusammen mit dem Nummerncode vor dem Aussenden der unverständlichen Meldung von der aktuell zuständigen Mobilvermittlungssteile an eine zentrale Teilnehmerdatenbasis im Heimat-Mobilfunknetz gerichtet.

Bei einer alternativen Lösung der Aufgabe enthalten die Meldungen ebenfalls einen Nummerncode, durch den die in der Meldung mitzuteilenden Nutzinformationen, die in einer für den Funkteilnehmer nicht verständlichen Sprache vorliegen, entsprechenden Nutzinformationen in einer anderen Sprache zugeordnet werden, jedoch wird vor dem Aussenden der unverständlichen Meldung von der für den Funkteilnehmer zuständigen Mobilvermittlungsstelle eine Anforderung zusammen mit dem Nummerncode an eine gesonderte Steuerungseinheit gerichtet. Die entsprechenden Nutzinformationen in der anderen Sprache werden von einer mit der gesonderten Steuerungseinheit in Verbindung stehenden Codetabelle bereitgestellt und über die aktuell zuständige Mobilvermittlungsstelle zur Funkteilnehmerstation rückgesendet.

Die jeweilige Codetabelle ist dabei für das gesamte GSM-Mobilfunksystem einheitlich definiert. Die Festlegung der für die entsprechenden Nutzinformationen geeigneten Sprache kann jedoch vom jeweiligen Mobilfunknetzbetreiber durchgeführt werden. Für den Fall, daß mehrere Sprachen für die mitzuteilenden Nutzinformationen an unterschiedliche Funkteilnehmer gewünscht sind, wird jeweils eine geeignete Sprache für die verschiedenen Nutzinformationen in den Meldungen festgelegt.

Besonders von Vorteil ist es, wenn eine Spracheninformation zur Kennzeichnung einer vom Funkteilnehmer gewünschten Sprache in der Anforderung mitgesendet oder von der aktuell zuständigen Mobilvermittlungsstelle bereitgestellt wird. Die dezentrale Teilnehmerdatenbasis (VLR) wird auf das Vorliegen der Spracheninformation als Teilnehmerdatum abgefragt. Bei deren Vorliegen werden die entsprechenden Nutzinformationen (z.B. TX2) in der anderen Sprache von einer mit der dezentralen Teilnehmerdatenbasis (VLR) in Verbindung stehenden Codetabelle (CTV) bereitgestellt und direkt zur Funkteilnehmerstation (MS) rückgesendet.

Die Erfindung wird anhand eines in Figuren dargestellten Ausführungsbeispiels erläutert. Im einzelnen zeigen
- Figur 1: einen Signalflußplan zum Empfang von Meldungen in einer für den Funkteilnehmer verständlichen Sprache auf Anforderung des Funkteilnehmers,
- Figur 2: einen Signalflußplan zum Empfang von Meldungen in einer für den Funkteilnehmer verständlichen Sprache auf Anforderung durch die für ihn aktuell zuständige Mobilvermittlungsstelle und
- Figur 3: einen Signalflußplan zum Empfang von Meldungen in einer für den Funkteilnehmer verständlichen Sprache auf Anforderung durch die für ihn aktuell zuständige Mobilvermittlungsstelle an eine gesonderte Steuerungseinheit.

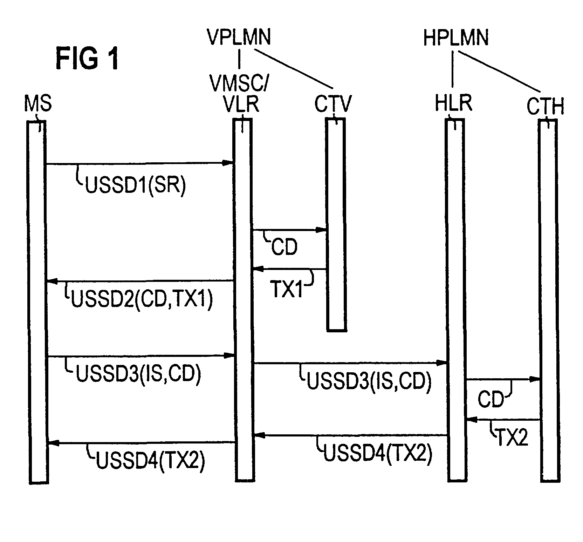

Figur 1 zeigt den Informationsfluß zwischen den Einrichtungen eines nach dem GSM-Verfahren betriebenen Mobilfunksystems. Die Einrichtungen, die Informationen austauschen, sind eine vom Funkteilnehmer bedienbare Funkteilnehmerstation MS, eine Mobilvermittlungsstelle VMSC mit zugehöriger dezentraler Teilnehmerdatenbasis VLR in einem Mobilfunknetz VPLMN (Visited Public Land Mobile Network), eine mit der dezentralen Teilnehmerdatenbasis VLR in Verbindung stehende erste Codetabelle CTV, eine zentrale Teilnehmerdatenbasis HLR in einem Mobilfunknetz HPLMN (Home Public Land Mobile Network) und eine mit der dezentralen Teilnehmerdatenbasis HLR in Verbindung stehende zweite Codetabelle CTH. Das Mobilfunknetz HPLNN ist das Heimat-Mobilfunknetz des Funkteilnehmers, dessen Teilnehmerdaten in der zentralen Teilnehmerdatenbasis HLR gespeichert sind. Befindet sich der Funkteilnehmer nicht in seinem Heimat-Mobilfunknetz HPLMN, sondern in einem anderen Mobilfunknetz, werden seine Teilnehmerdaten zu einer dezentralen Teilnehmerdatenbasis, die zu einer für den Funkteilnehmer aktuell zuständigen Mobilvermittlungsstelle in diesem andern Netz gehört, übertragen und dort vorübergehend für die Dauer seines Aufenthalts in einem lokal begrenzten Aufenthaltsgebiet gespeichert.

Für das vorliegende Beispiel sei angenommen, daß der Funkteilnehmer sich in dem Mobilfunknetz VPLMN aufhält und die Mobilvermittlungsstelle VMSC mit angeschlossener dezentraler Teilnehmerdatenbasis VLR für den Funkteilnehmer aktuell zuständig ist. Über die Funkteilnehmerstation MS kann der Funkteilnehmer Teilnehmereingaben vornehmen und an das Mobilfunknetz VPLMN aussenden. Ebenso kann der Funkteilnehmer über die Funkteilnehmerstation MS Meldungen, in denen Nutzinformationen enthalten sind, empfangen. Im Gegensatz zu den Teilnehmereingaben, die in der Regel aus sprachenneutralen,festgelegten Zeichen- und Ziffernfolgen bestehen, sind die Nutzinformationen in den Meldungen üblicherweise aus Textinformationen zusammengesetzt. Durch die Mobilität des Funkteilnehmers über Landesgrenzen hinweg, kann es daher vorkommen, daß der Funkteilnehmer in fremden Mobilfunknetzen Nutzinformationen über seine Funkteilnehmerstation MS empfängt, die in einer für ihn unverständlichen Sprache vorliegen.

Wünscht der Funkteilnehmer die Nutzung eines bestimmten Dienstes, sendet er über die Funkteilnehmerstation MS eine Meldung USSD1 aus, die an die für ihn zuständige Mobilvermittlungsstelle VMSC im aktuellen Mobilfunknetz VPLMN übertragen wird. In der Meldung USSD1 werden Informationen SR zur Kennzeichnung der Anforderung des Dienstes und der Diensteart mitgesendet. Wird beispielsweise der Dienst "Anrufweitergabe während eines bereits aufgenommenen Gesprächs "(Call Transfer) vom Funkteilnehmer ausgelöst, erfolgt eine Bearbeitung dieses Dienstes durch die für den Funkteilnehmer im Moment gerade zuständige Mobilvermittlungsstelle VMSC. Es sei angenommen, daß die Mobilvermittlungsstelle VMSC den gewünschten Dienst nicht unterstützen kann, so daß dem Funkteilnehmer eine Meldung über die Nichtbeanspruchung des gewünschten Dienstes zur Verfügung zu stellen ist.

Von der Mobilvermittlungsstelle VMSC wird mit einem Nummerncode CD auf die Codetabelle CTV zugegriffen, deren Einträge von Nummerncodes und zugehörigen Nutzinformationen in einer bestimmten Sprache gebildet werden. Im vorliegenden Beispiel werden die aus dem Text "Supplementary Service not available" bestehenden Nutzinformationen TX1 ausgelesen, da der Funkteilnehmer sich beispielsweise in einem englischsprachigen Mobilfunknetz befindet. Der genannte Text gelangt zur Mobilvermittlungsstelle VMSC zurück. In einer Antwort USSD2 werden der Nummerncode CD und die Nutzinformationen TX1 von der Mobilvermittlungsstelle VMSC zur Funkteilnehmerstation MS übermittelt.

Angenommen, der Funkteilnehmer versteht die von der Funkteilnehmerstation MS angezeigten Textinformationen in der Meldung USSD2 mangels englischer Sprachkenntnisse nicht, besteht für ihn die Möglichkeit, eine Meldung USSD3 über die Funkteilnehmerstation MS zu starten. Mit der Meldung USSD3 wird zusammen mit dem Nummerncode CD eine Anforderung IS zur Interpretierung der empfangenen nicht verständlichen Nutzinformationen TX1, d.h. eine Anforderung zur Übermittlung der Nutzinformationen in einer für den Funkteilnehmer verständlichen Sprache, an die für ihn zuständige Mobilvermittlungsstelle VMSC gerichtet.

Die Angabe einer vom Funkteilnehmer gewünschten Sprache ist anhand einer in der Anforderung IS enthaltenen Spracheninformation, bestehend beispielsweise aus einem Teilcode zur Festlegung einer von mehreren Sprachen, möglich. Wenn in diesem Fall von der zuständigen Mobilvermittlungsstelle VMSC im Mobilfunknetz VPLMN die Nutzinformationen in der geforderten Sprache durch Abfragen der Codetabelle CTV bereitgestellt werden können, erfolgt das Auslesen der entsprechenden Nutzinformationen in der geeigneten Sprache bereits frühzeitig. Die Nutzinformationen TX2 in der verständlichen Sprache werden unmittelbar von der zuständigen Mobilvermittlungsstelle VMSC an die anfordernde Funkteilnehmerstation MS rückgesendet. Im vorliegenden Fall ist als geeignete Sprache Deutsch ausgewählt worden, sodaß der mitgeteilte Text aus dem Wortlaut "Zusatzdienst nicht verfügbar" besteht.

Für den Fall, daß von der zuständigen Mobilvermittlungsstelle VMSC die Nutzinformationen in der geforderten Sprache nicht direkt zur Verfügung gestellt werden können, wird die Meldung USSD3 mit der Anforderung IS und dem Nummerncode CD an die zentrale Teilnehmerdatenbasis HLR im Heimat-Mobilfunknetz HPLMN weitergeleitet. Durch den eintreffenden Nummerncode CD ist der zu interpretierende Text festgelegt, so daß anstelle der für den Funkteilnehmer nicht verständlichen Nutzinformationen TX1 die entsprechenden Nutzinformationen TX2 aus der Tabelle entnommen und der zentralen Teilnehmerdatenbasis HLR zur Verfügung gestellt werden. Die Nutzinformationen, die von dem für den Funkteilnehmer verständlichen deutschen Text "Zusatzdienst nicht verfügbar" gebildet werden, gelangen in einer Meldung USSD4 von der zentralen Teilnehmerdatenbasis HLR zur zuständigen Mobilvermittlungsstelle VMSC und von ihr zur anfordernden Funkteilnehmerstation MS.

Dabei können in der Meldung USSD3, mit der eine Interpretierung des angezeigten Textes von der Funkteilnehmerstation MS initiiert wird, spezielle Codes für das direkte Weiterleiten der Anforderung an das Heimat-Mobilfunknetz und damit an die zentrale Teilnehmerdatenbasis HLR eingegeben werden. In der Codetabelle CTV bzw. CTH sind Nummerncodes enthalten, durch die in jedem Mobilfunknetz Nutzinformationen in einer bestimmten Sprache festgelegt sind. Die Einträge in den Codetabellen CTV, CTH sind dabei für die Mobilfunknetze im GSM-Mobilfunksystem einheitlich definiert. In welcher Sprache die Interpretierung der Nutzinformationen erfolgt, kann vom jeweiligen Netzwerkbetreiber des Mobilfunknetzes durch Eingabe entsprechender Textinformationen in die Tabellen bestimmt werden. Für den Fall, daß in einem Mobilfunknetz mehrere Sprachen für unterschiedliche Funkteilnehmer zur Verfügung gestellt werden, sind für jeden Text entsprechende Textinformationen in der jeweiligen Sprache durch die Codetabellen festzulegen.

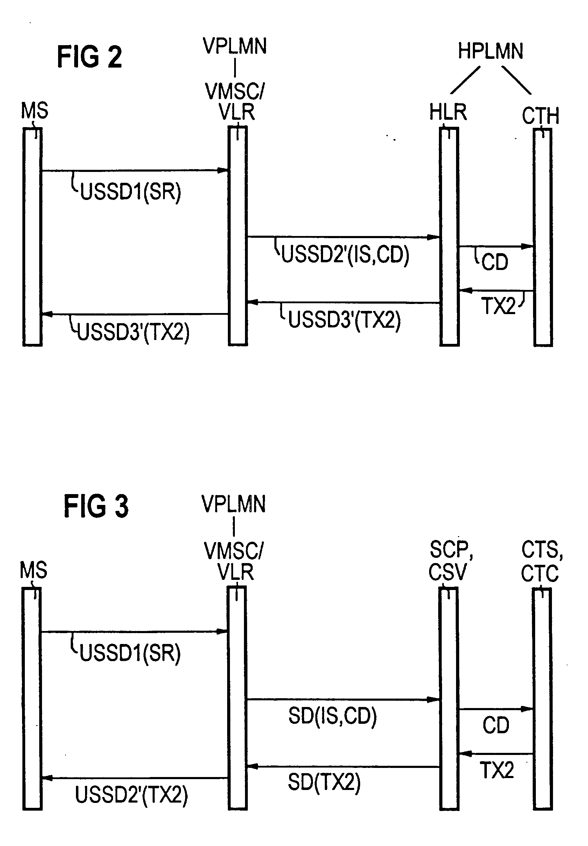

Figur 2 zeigt den Informationsfluß zwischen den Einrichtungen des Mobilfunksystems für den Fall, daß im Anschluß an die Meldung USSD1 von der für den Funkteilnehmer zuständigen Mobilvermittlungsstelle VMSC selbst eine Meldung USSD2' mit der Anforderung IS und dem Nummerncode CD an die zentrale Teilnehmerdatenbasis HLR im Heimat-Mobilfunknetz HPLMN gerichtet wird. Dies hat den Vorteil, daß die Nutzinformationen in einer für den Funkteilnehmer verständlichen Sprache frühzeitig angefordert werden können, ohne daß zuerst eine Meldung zur Funkteilnehmerstation MS zurückgesendet und die Anforderung der Interpretierung der in der nicht verständlichen Sprache übermittelten Nutzinformationen durchgeführt werden muß. Auf Grund der eintreffenden Anforderung IS und des empfangenen Nummerncodes CD frägt die zentrale Teilnehmerdatenbasis HLR die zugehörige Codetabelle CTH nach den entsprechenden Nutzinformationen in einer anderen Sprache ab. Die für das oben genannte Beispiel bereitgestellten Nutzinformationen TX2 mit dem Wortlaut "Zusatzdienst nicht verfügbar", werden von der zentralen Teilnehmerdatenbasis HLR in der Meldung USSD3' zur zuständigen Mobilvermittlungsstelle VMSC im Mobilfunknetz VPLMN und von dort zur anfordernden Funkteilnehmerstation MS rückgesendet. Die im Mobilfunknetz VPLMN empfangenen Nutzinformationen können folglich an den Funkteilnehmer bzw. an die Funkteilnehmerstation MS transparent von der Mobilvermittlungsstelle VMSC durchgeschaltet werden.

Figur 3 zeigt den Informationsfluß zwischen der Funkteilnehmerstation MS, der für den Funkteilnehmer aktuell zuständigen Mobilvermittlungsstelle VMSC im Mobilfunknetz VPLMN und gesonderten Steuerungseinheiten SCP bzw. CSV, von denen die Steuerungseinheit SCP eine Dienstesteuerungseinheit zur Nutzung von Diensten in einem intelligenten Netz und die Steuerungseinheit CSV eine Dienstesteuerungseinheit zur Nutzung von netzbetreiberspezifischen Diensten zusätzlich zu den im GSM-Mobilfunksystem bestehenden Diensten ist. Die gesonderten Dienstesteuerungseinheiten SCP bzw. CSV stehen ebenfalls in Verbindung mit zugehörigen Codetabellen CTS bzw. CTC, in denen Nummerncodes und entsprechende Nutzinformationen in einer gewünschten Sprache enthalten sind. Bei Empfang der von der Funkteilnehmerstation MS gestarteten Meldung USSD1 sendet die für den Funkteilnehmer zuständige Mobilvermittlungsstelle VMSC die Anforderung IS und den Nummerncode CD zur gesonderten Dienstesteuerungseinheit SCP bzw. CSV, die aus dem empfangenen Nummerncode CD die Nutzinformationen TX2 in der festgelegten Sprache aus der Codetabelle CTS bzw. CTC abruft. Die Nutzinformationen TX2 werden in der Rückrichtung zwischen der gesonderten Dienstesteuerungseinheit SCP bzw. CSV und der zuständigen Mobilvermittlungsstelle VMSC und von dort in der Meldung USSD2' zur anfordernden Funkteilnehmerstation MS übertragen. Die Übertragung der Informationen zwischen mobilfunknetzeigenen Einrichtungen und mobilfunknetzfremden Einrichtungen - im vorliegenden Fall zwischen der Mobilvermittlungsstelle VMSC und der gesonderten Dienstesteuerungseinheit SCP bzw. CSV - erfolgt anhand bestehender Übertragungsprotokolle für die Anbindung von Mobilfunknetzen an andere Netze.

Bei der automatisch von der Mobilvermittlungsstelle VMSC vor dem Aussenden der unverständlichen Nutzinformationen ausgelösten Anforderung IS gemäß den Figuren 2 und 3 kann auch die Spracheninformation zur Kennzeichnung einer vom Funkteilnehmer gewünschten Sprache von der Mobilvermittlungsstelle VMSC selbst bereitgestellt werden. Die dezentrale Teilnehmerdatenbasis VLR überprüft, ob in den für den Funkteilnehmer gespeicherten Teilnehmerdaten diese Spracheninformation als Teilnehmerdatum eingetragen ist, sodaß bei Vorliegen der Spracheninformation die entsprechenden Nutzinformationen TX2 in der gekennzeichneten Sprache von der mit der dezentralen Teilnehmerdatenbasis VLR in Verbindung stehenden Codetabelle , die für diesen Fall in den Figuren 2 und 3 nicht dargestellt, bereitgestellt und direkt zur Funkteilnehmerstation MS rückgesendet werden. Die zentrale Teilnehmerdatenbasis im Heimat-Mobilfunknetz gemäß Figur 2 oder die Dienstesteuerungseinheit SCP, CSV gemäß Figur 3 braucht dann nicht zu befragt werden.

Durch Übertragung eines Nummerncodes in den Meldungen können an den Funkteilnehmer bzw. die Funkteilnehmerstation auszusendende Nutzinformationen in jedem Mobilfunknetz durch entsprechende Nutzinformationen einer anderen - verständlichen - Sprache angefordert werden. Die Anforderung der Nutzinformationen in der für den Funkteilnehmer verständlichen Sprache kann durch den Funkteilnehmer selbst bzw. durch die Funkteilnehmerstation oder durch die für den Funkteilnehmer aktuell zuständige Mobilvermittlungsstelle in dem Mobilfunknetz, in dem sich der Funkteilnehmer momentan aufhält, gestartet werden. Die angeforderten Nutzinformationen in der für den Funkteilnehmer verständlichen Sprache werden nach Abfrage mindestens einer Codetabelle, in der die Nummerncodes und die entsprechenden Nutzinformationen in einer bestimmten Sprache eingetragen sind, ausgelesen.

## Patentansprüche

1. Verfahren zur Übertragung von Meldungen, die jeweils aus einem Mobilfunknetz (VPLMN) an einen Funkteilnehmer gerichtet und von einer Funkteilnehmerstation (MS) empfangen werden, bei dem der Funkteilnehmer sich nicht in seinem Heimat-Mobilfunknetz (HPLMN) befindet, in dem er mit seinen Teilnehmerdaten in einer zentralen Teilnehmerdatenbasis (HLR) registriert wird, und in einem anderen Mobilfunknetz (VPLMN) von einer für ihn aktuell zuständigen Mobilvermittlungsstelle (VMSC) mit zugehöriger dezentraler Teilnehmerdatenbasis (VLR), in der seine Teilnehmerdaten vorübergehend gespeichert werden, betreut wird,
**dadurch gekennzeichnet,**
**daß** die Meldungen (USSD2) jeweils einen Nummerncode (CD) enthalten, durch den die in der Meldung mitzuteilenden Nutzinformationen (TX1), die in einer für den Funkteilnehmer nicht verständlichen Sprache vorliegen, entsprechenden Nutzinformationen (TX2) in einer anderen Sprache zugeordnet werden und daß die entsprechenden Nutzinformationen (TX2) auf Anforderung nach Empfang oder vor der Übertragung der unverständlichen Nutzinformationen in der Meldung (USSD2) von einer Codetabelle (CTH) im Heimat-Mobilfunknetz (HPLMN) des Funkteilnehmers abgerufen und in einer Meldung (USSD4) zur Funkteilnehmerstation übertragen werden.

2. Verfahren nach Anspruch 1,
**dadurch gekennzeichnet,**
**daß** nach Empfang der unverständlichen Nutzinformationen in der Meldung (USSD2) von der Funkteilnehmerstation (MS) des Funkteilnehmers zusammen mit dem Nummerncode (CD) eine Anforderung (IS) zur Übermittlung der entsprechenden Nutzinformationen (TX2) in der anderen Sprache an die für den Funkteilnehmer aktuell zuständige Mobilvermittlungsstelle (VMSC) im anderen Mobilfunknetz (VPLMN) gerichtet wird.

3. Verfahren nach Anspruch 2,
**dadurch gekennzeichnet,**
**daß** die Anforderung (IS) und der Nummerncode (CD) von der aktuell zuständigen Mobilvermittlungsstelle (VMSC) im anderen Mobilfunknetz (VPLMN) an die zentrale Teilnehmerdatenbasis (HLR) im Heimat-Mobilfunknetz (HPLMN) des Funkteilnehmers weitergeleitet wird, und daß die entsprechenden Nutzinformationen (TX2) in der anderen Sprache von der mit der zentralen Teilnehmerdatenbasis (HLR) in Verbindung stehenden Codetabelle (CTH) bereitgestellt und über die aktuell zuständige Mobilvermittlungsstelle (VMSC) zur Funkteilnehmerstation (MS) rückgesendet werden.

4. Verfahren nach Anspruch 1,
**dadurch gekennzeichnet,**
**daß** vor dem Aussenden der unverständlichen Nutzinformationen in der Meldung von der aktuell zuständigen Mobilvermittlungsstelle (VMSC) eine Anforderung (IS) zusammen mit dem Nummerncode (CD) an die zentrale Teilnehmerdatenbasis (HLR) im Heimat-Mobilfunknetz (HPLMN) gerichtet wird und daß die entsprechenden Nutzinformationen (TX2) in der anderen Sprache von der mit der zentralen Teilnehmerdatenbasis (HLR) in Verbindung stehenden Codetabelle (CTH) bereitgestellt und über die aktuell zuständige Mobilvermittlungsstelle (VMSC) zur Funkteilnehmerstation (MS) rückgesendet werden.

5. Verfahren zur Übertragung von Meldungen, die jeweils aus einem Mobilfunknetz (VPLMN) an einen Funkteilnehmer gerichtet und von einer Funkteilnehmerstation (MS) empfangen werden, bei dem der Funkteilnehmer sich nicht in seinem Heimat-Mobilfunknetz (HPLMN) befindet und in einem anderen Mobilfunknetz (VPLMN) von einer für ihn aktuell zuständigen Mobilvermittlungsstelle (VMSC) mit zugehöriger dezentraler Teilnehmerdatenbasis (VLR), in der seine Teilnehmerdaten vorübergehend gespeichert werden, betreut wird,
**dadurch gekennzeichnet,**
**daß** die Meldungen (USSD2) jeweils einen Nummerncode (CD) enthalten, durch den die in der Meldung mitzuteilenden Nutzinformationen, die in einer für den Funkteilnehmer nicht verständlichen Sprache vorliegen, entsprechenden Nutzinformationen (TX2) in einer anderen Sprache zugeordnet werden, daß vor dem Aussenden der unverständlichen Nutzinformationen in der Meldung von der für den Funkteilnehmer zuständigen Mobilvermittlungsstelle (VMSC) eine Anforderung (IS) zusammen mit dem Nummerncode (CD) an eine gesonderte Steuerungseinheit (SCP, CSV) gerichtet wird und daß die entsprechenden Nutzinformationen (TX2) in der anderen Sprache von einer mit der gesonderten Steuerungseinheit (SCP, CSV) in Verbindung stehenden Codetabelle (CTS, CTC) bereitgestellt und über die aktuell zuständige Mobilvermittlungsstelle (VMSC) zur Funkteilnehmerstation (MS) rückgesendet werden.

6. Verfahren nach Anspruch 5,
**dadurch gekennzeichnet,**
**daß** die gesonderte Steuerungseinheit von einer Dienstesteuerungseinheit (SCP) zur Nutzung von Diensten in einem intelligenten Netz gebildet wird.

7. Verfahren nach einem der vorhergehenden Ansprüche,
**dadurch gekennzeichnet,**
**daß** eine Spracheninformation zur Kennzeichnung einer vom Funkteilnehmer gewünschten Sprache von der Funkteilnehmerstation (MS) in der Anforderung (IS) zur aktuell zuständigen Mobilvermittlungsstelle (VMSC) gesendet oder von der aktuell zuständigen Mobilvermittlungsstelle (VMSC) selbst bereitgestellt wird, daß die dezentrale Teilnehmerdatenbasis (VLR) auf das Vorliegen der Spracheninformation als Teilnehmerdatum abgefragt wird und daß bei Vorliegen der Spracheninformation die entsprechenden Nutzinformationen (TX2) in der anderen Sprache von einer mit der dezentralen Teilnehmerdatenbasis (VLR) in Verbindung stehenden Codetabelle (CTV) bereitgestellt und direkt zur Funkteilnehmerstation (MS) rückgesendet werden.

## Claims

1. Method for transmitting messages which are respectively directed from a mobile radio network (VPLMN) to a radio subscriber and are received by a radio subscriber station (MS), where the radio subscriber is not situated in his home mobile radio network (HPLMN), in which he is recorded with his subscriber data in a central subscriber database (HLR), and is being looked after in another mobile radio network (VPLMN) by a mobile switching centre (VMSC) which is currently responsible for him and has an associated local subscriber database (VLR) in which his subscriber data are temporarily stored,
**characterized**
**in that** the messages (USSD2) respectively contain a numerical code (CD) which associates the user information (TX1) which is to be communicated in the message and is in a language which the radio subscriber does not understand with corresponding user information (TX2) in another language, and in that the corresponding user information (TX2) is retrieved, on request after the incomprehensible user information in the message (USSD2) has been received or before it is transmitted, from a code table (CTH) in the home mobile radio network (HPLMN) of the radio subscriber and is transmitted to the radio subscriber station in a message (USSD4).

2. Method according to Claim 1,
**characterized**
**in that**, after the incomprehensible user information in the message (USSD2) has been received by the radio subscriber station (MS) of the radio subscriber together with the numerical code (CD), a request (IS) for transmission of the corresponding user information (TX2) in the other language is directed to the mobile switching centre (VMSC) which is currently responsible for the radio subscriber in the other mobile radio network (VPLMN).

3. Method according to Claim 2,
**characterized**
**in that** the request (IS) and the numerical code (CD) are forwarded from the currently responsible mobile switching centre (VMSC) in the other mobile radio network (VPLMN) to the central subscriber database (HLR) in the home mobile radio network (HPLMN) of the radio subscriber, and in that the corresponding user information (TX2) in the other language is provided by the code table (CTH) connected to the central subscriber database (HLR) and is returned to the radio subscriber station (MS) via the currently responsible mobile switching centre (VMSC).

4. Method according to Claim 1,
**characterized**
**in that**, before the incomprehensible user information in the message is transmitted, the currently responsible mobile switching centre (VMSC) directs a request (IS) together with the numerical code (CD) to the central subscriber database (HLR) in the home mobile radio network (HPLMN), and in that the corresponding user information (TX2) in the other language is provided by the code table (CTH) connected to the central subscriber database (HLR) and is returned to the radio subscriber station (MS) via the currently responsible mobile switching centre (VMSC).

5. Method for transmitting messages which are respectively directed from a mobile radio network (VPLMN) to a radio subscriber and are received by a radio subscriber station (MS), where the radio subscriber is not situated in his home mobile radio network (HPLMN) and is being looked after in another mobile radio network (VPLMN) by a mobile switching centre (VMSC) which is currently responsible for him and has an associated local subscriber database (VLR) in which his subscriber data are temporarily stored,
**characterized**
**in that** the messages (USSD2) respectively contain a numerical code (CD) which associates the user information which is to be communicated in the message and is in a language which the radio subscriber does not understand with corresponding user information (TX2) in another language, in that, before the incomprehensible user information in the message is transmitted, the mobile switching centre (VMSC) responsible for the radio subscriber directs a request (IS) together with the numerical code (CD) to a separate control unit (SCP, CSV), and in that the corresponding user information (TX2) in the other language is provided by a code table (CTS, CTC) connected to the separate control unit (SCP, CSV) and is returned to the radio subscriber station (MS) via the currently responsible mobile switching centre (VMSC).

6. Method according to Claim 5,
**characterized**
**in that** the separate control unit is formed by a service control unit (SCP) for the use of services in an intelligent network.

7. Method according to one of the preceding claims,
**characterized**
**in that** a language information item for identifying a language desired by the radio subscriber is sent to the currently responsible mobile switching centre (VMSC) by the radio subscriber station (MS) in the request (IS) or is provided by the currently responsible mobile switching centre (VMSC) itself, in that the local subscriber database (VLR) is polled for the presence of the language information item as subscriber data item, and in that, if the language information item is present, the corresponding user information (TX2) in the other language is provided by a code table (CTV) connected to the local subscriber database (VLR) and is returned directly to the radio subscriber station (MS).

## Revendications

1. Procédé destiné à la transmission de messages destinés, à partir d'un réseau de radio mobile (VPLMN), à un abonné radio et reçus par un poste d'abonné radio (MS) au cours duquel l'abonné radio ne séjourne pas dans son réseau de radio mobile d'origine (HPLMN), dans lequel il est enregistré avec des données d'abonné dans une base centralisée de données d'abonnés (HLR), et est pris en charge, dans un autre réseau de radio mobile (VPLMN), par un centre de commutation mobile (VMSC), actuellement compétent pour cet abonné radio, comportant une base correspondante décentralisée (VLR) de données d'abonnés, dans laquelle sont stockées temporairement ses données d'abonné
**caractérisé par le fait**
**que** les messages (USSD2) renferment chacun un code numéroté (CD), grâce auquel les informations utiles (TX1), à communiquer dans le message et qui sont rédigées dans une langue non compréhensible pour l'abonné radio, correspondent à des informations utiles correspondantes (TX2) dans une autre langue et que les informations utiles correspondantes (TX2), sur demande à la suite de la réception ou avant la transmission des informations utiles non compréhensibles dans le message (USSD2), sont lues dans un tableau de codes (CTH) dans le réseau de radio mobile d'origine (HPLMN) de l'abonné radio et transmises dans une message (USSD4) au poste d'abonné radio.

2. Procédé selon la revendication 1
**caractérisé par le fait**
**que**, après réception des informations utiles non compréhensibles dans le message (USSD2), le poste d'abonné radio (MS) de l'abonné radio adresse, en commun avec le code numéroté (CD), une demande (IS) de transmission des informations utiles correspondantes (TX2) dans l'autre langue au centre de commutation mobile (VMSC), actuellement compétent pour l'abonné radio dans l'autre réseau de radio mobile (VPLMN).

3. Procédé selon la revendication 2
**caractérisé par le fait**
**que** la demande (IS) et le code numéroté (CD) sont retransmis du centre de commutation mobile (VMSC), actuellement compétent dans l'autre réseau de radio mobile (VPLMN), à la base centralisée de données d'abonnés (HLR) dans le réseau de radio mobile d'origine (HPLMN) de l'abonné radio et que les informations utiles correspondantes (TX2) dans l'autre langue sont mises à disposition par le tableau de codes (CTH), qui est en liaison avec la base centralisée de données d'abonnés (HLR), et renvoyées, par l'intermédiaire du centre de commutation mobile (VMSC) actuellement compétent au poste d'abonné radio (MS).

4. Procédé selon la revendication 1
**caractérisé par le fait**
**que**, avant l'émission des informations utiles non compréhensibles dans le message, le centre de commutation mobile (VMSC) actuellement compétent envoie une demande (IS) accompagnée du code numéroté (CD) à la base centralisée de données d'abonnés (HLR) dans le réseau de radio mobile d'origine (HPLMN) et que les informations utiles correspondantes (TX2) dans l'autre langue sont mises à disposition par le tableau de codes (CTH), qui est en liaison avec la base centralisée de données d'abonnés (HLR), et renvoyées, par l'intermédiaire du centre de commutation mobile (VMSC) actuellement compétent au poste d'abonné radio (MS).

5. Procédé destiné à la transmission de messages destinés, à partir d'un réseau de radio mobile (VPLMN), à un abonné radio et reçus par un poste d'abonné radio (MS) au cours duquel l'abonné radio ne séjourne pas dans son réseau de radio mobile d'origine (HPLMN) et est pris en charge, dans un autre réseau de radio mobile (VPLMN), par un centre de commutation mobile (VMSC), actuellement compétent pour cet abonné radio, comportant une base correspondante décentralisée (VLR) de données d'abonnés, dans laquelle sont stockées temporairement ses données d'abonné
**caractérisé par le fait**
**que** les messages (USSD2) renferment chacun un code numéroté (CD), grâce auquel les informations utiles à communiquer dans le message et qui sont rédigées dans une langue non compréhensible pour l'abonné radio, correspondent à des informations utiles correspondantes (TX2) dans une autre langue, que, avant l'émission des informations utiles non compréhensibles dans le message, le centre de commutation mobile (VMSC) compétent pour l'abonné radio envoie une demande (IS), accompagnée du code numéroté (CD), à une unité spéciale de commande (SCP, CSV) et que les informations utiles correspondantes (TX2) dans l'autre langue, sont mises à disposition par un tableau de codes (CTS, CTC), qui est en liaison avec l'unité spéciale de commande (SCP, CSV), et renvoyées, par l'intermédiaire du centre de commutation mobile (VMSC), actuellement compétent, au poste d'abonné radio (MS).

6. Procédé selon la revendication 5
**caractérisé par le fait**
**que** l'unité spéciale de commande est formée par une unité de commande de services (SCP) destinée à utiliser des services dans un réseau intelligent.

7. Procédé selon l'une des revendications précédentes
**caractérisé par le fait**
**qu'**une information, relative à la langue et destinée à caractériser une langue souhaitée par l'abonné radio, est envoyée par le poste d'abonné radio (MS) dans la demande (IS) au centre de commutation mobile (VMSC) actuellement compétent ou est mise à disposition par le centre de commutation mobile (VMSC) actuellement compétent lui-même, que la base décentralisée (VLR) de données d'abonnés est interrogée quant à la présence d'une information relative à la langue en tant que donnée d'abonné et que, si l'information relative à la langue existe, les informations utiles correspondantes (TX2) dans l'autre langue sont mises à disposition par un tableau de codes (CTV), qui est en relation avec la base décentralisée (VLR) de données d'abonnés, et renvoyées directement au poste d'abonné radio (MS).
